# EUROPÄISCHE PATENTSCHRIFT

(11) **EP 0 869 452 B1**
(45) Veröffentlichungstag und Bekanntmachung des Hinweises auf die Patenterteilung: **19.01.2005**
(21) Anmeldenummer: 98102374.0
(22) Anmeldetag: 11.02.1998
(51) Int. Cl.: G06K 19/077

(54) **Minichipkarte sowie Verfahren zu ihrer Herstellung**
Mini chip card and method for its production
Mini carte à puce et méthode de production

(30) Priorität: 02.04.1997 DE 19713641
(43) Veröffentlichungstag der Anmeldung: 07.10.1998
(73) Patentinhaber: Gemplus GmbH, 70794 Filderstadt (DE)
(72) Erfinder: Schmidt, Frank, Dr., 99891 Fischbach (DE)
(74) Vertreter: Grünecker, Kinkeldey, Stockmair & Schwanhäusser Anwaltssozietät

(56) Entgegenhaltungen:
- EP-A- 0 535 436
- EP-A- 0 638 873
- DE-A- 4 401 588

## Beschreibung

Die vorliegende Erfindung betrifft eine Minichipkarte sowie ein Verfahren zu ihrer Herstellung.

Insbesondere im Bereich Mobilfunk haben sich sogenannte Minichipkarten (ID-000-Format) durchgesetzt, die Kantenlängen von 15 und 25 mm aufweisen. Aus Gründen die Fertigungsprozessoptimierung werden diese Karten üblicherweise aus Standardkarten mit ID-1-Format ausgestanzt, so dass im Fertigungsprozess praktisch kein Unterschied zwischen einer Herstellung einer Minichipkarte bzw. Sims-Karte und einer Standardkarte besteht.

Auch werden Standardkarten im ID-1-Format angeboten, in denen die Minichipkarten vorgestanzt sind und über vorzugsweise drei Bruchlaschen am Kartenkörper gehalten werden. Der Endkunde kann die Karte dann entsprechend seinen Bedürfnissen entweder als Standardkarte verwenden oder die Minichipkarte aus der ID-1-Karte herausbrechen und als übliche Sims-Karte verwenden. Auch wurden bereits Varianten vorgeschlagen, bei denen die Minichipkarte herstellerseitig bereits vollständig aus dem großen Kartenkörper ausgestanzt ist und nur über eine auf der den Kontakten abgewandten Seite der Karte mit einem Klebeband in dem großen Kartenkörper gehalten wird.

Obwohl diese Herstellungsart für Minichipkarten aus Sicht einer einfachen Herstellungsweise sinnvoll ist, so stellt dies dennoch einen unnötigen Materialverbrauch dar, der unter Kostengesichtspunkten nicht wünschenswert ist.

EP-A-0 638 873 beschreibt die Herstellung von Adapter-Chipkarten enthaltend Minichipkarten. Hierzu wird eine Minichipkarte in eine Öffnung einer Standardchipkarte eingesetzt und mit einem Klebeband, das sich auf der Rückseite der Standardchipkarte befindet, befestigt. Insbesondere kann die Minichipkarte als ein Chipmodul ausgeführt sein, d.h. die Minichipkarte entspricht in Form und Größe dem Chipmodul und weist einen Trägerflm auf, auf dessen gegenüber liegenden Seiten jeweils ein Chip und Kontakte angebracht sind, die über Löcher in dem Trägerfilm elektrisch leitend miteinander verbunden sind. Eine derartige Minichipkarte, die in Form und Größe dem Chipmodul entspricht, wird durch Laminieren hergestellt, wobei der Chip in den Chipkartenkörper eingebettet ist, der auf den Trägerfilm auflaminiert ist.

Es ist die Aufgabe der vorliegenden Erfindung, eine Lösung anzugeben, mit den Minichipkarten in einfacher und kostengünstiger Weise hergestellt werden können.

Diese Aufgabe wird durch die Gegenstände der Ansprüche 1, 5, 6 und 10 gelöst.

Bevorzugte Ausgestaltungen der vorliegenden Erfindung sind Gegenstand der Unteransprüche.

Die vorliegende Erfindung baut auf der Erkenntnis auf, dass eine Minichipkartenherstellung auf Grundlage bewährter und bereits standardisierter Prozessschritte erfolgen kann, wie sie zur Chipkartenmodulherstellung verwendet werden. Insbesondere können Minichipkarten, aufbauend auf Modulherstellungsschritten, erstellt werden, wie sie beispielsweise aus der DE 44 01 588 A1 bekannt sind, die auf die Anmelderin der vorliegenden Erfindung zurückgeht und auf die ausdrücklich Bezug genommen wird.

Gemäß den erwähnten bekannten Verfahren wird das Verkapseln der Chips auf dem Trägerfilm nicht mehr durch einen Harztropfen erreicht, sondern mittels Mouldtechnologie. Gemäß der Mouldtechnologie wird über dem zu verkapselnden Chip eine Gussform angebracht, die mit dem Trägerfilm abschließt, und anschließend wird über eine Öffnung eine flüssige Plastikgussmasse eingeführt, die extrem rasch aushärtet und den entsprechenden Chip vorzugsweise in einen quadratischen Plastikblock von mehreren Millimetern Kantenlänge, der mittels geeigneter Verfahren auf dem Trägerfilm haftet, einschließt. Mittels dieser Technologie sind hochgenaue und extrem belastbare Verkapselungen erzielbar, wobei die Form der Verkapselung entsprechend der aufgesetzten Form nahezu beliebig ausgestaltet werden kann.

Der vorliegenden Erfindung liegt die Erkenntnis zugrunde, daß dieser Prozeßschritt dazu verwendet werden kann, nicht nur eine extrem harte Verkapselung des Chips zu erreichen, sondern die Verkapselung so weit zu vergrößern, daß sie die Form einer Minichipkarte aufweist und somit das fertige Chipmodul bereits die eigentliche Minichipkarte darstellt.

Gemäß der vorliegenden Erfindung ist somit zur Herstellung von Minichipkarten nicht mehr der Umweg über Standardkarten erforderlich, aus denen die Minichipkarten in einem abschließenden Prozeßschritt ausgestanzt werden, sondern die Minichipkarte wird bereits während der "Modulherstellung" erstellt.

Gemäß einem weiteren Aspekt der vorliegenden Erfindung wird die auf diese Weise mittels Mouldtechnologie hergestellte Minichipkarte mit einer Dicke ausgeführt, die geringfügig unter der Dicke von Standardchipkarten liegt. Auf diese Weise wird ermöglicht, daß die so gefertigten Minichipkarten in Adapterchipkarten eingesetzt werden können. Die Adapterchipkarte kann dabei aus einer Standardkarte bestehen, in die an einer geeigneten Stelle eine Struktur ausgefräst wurde, die der Form der Minichipkarte entspricht. Die Tiefe der Einfräsung in der Adapterkarte entspricht vorzugsweise der Dicke der Minichipkarte einschließlich einer Klebeschicht, so daß nach dem Einkleben der Minichipkarte in den gefrästen Bereich der Adapterkarte die Minichipkarte bündig mit der Oberfläche der Adapterkarte abschließt.

Unter "Mouldtechnologie" bzw. unter "gemouldeter Chipverkappung" wird verstanden, daß die Kunststoffverkapselung, die verwendet wird, um den Chip und die Bonddrähte zu verkapseln, dadurch erreicht wird, daß an der Stelle des zu verkapselnden ICs eine Form über die Trägerfolie gesetzt wird, die zumindest einen Einlaßkanal aufweist, durch den verflüssigter Kunststoff unter Druck eingebracht wird. Der Kunststoff verfestigt sich dann zu dem durch die Form vorgegebenen Körper, wodurch äußerst präzise Kantenformen erreicht werden. Im Prozeß werden dabei vorzugsweise eine Vielzahl von Chips gleichzeitig verkappt, indem eine Form verwendet wird, die gleichzeitig eine Vielzahl von Chips überdeckt und in die entsprechend verflüssigter Kunststoff, der vorzugsweise durch Schmelzen einer Kunststoffpatrone erhalten wird, eingeführt wird.

Gemäß einem weiteren Aspekt der vorliegenden Erfindung wird die Minichipkarte bei ihrer Herstellung auf der nicht kontaktbehafteten Seite bereits mit einem Doppelklebeband mit Schutzschicht versehen und weist zusammen mit dem Doppelklebeband und der Schutzfolie eine Dicke auf, die der üblicher Minichipkarten entspricht. Wird die Minichipkarte für weitere Anwendungen in eine Adapterkarte eingesetzt, so wird die Schutzschicht entfernt und die Minichipkarte in die erwähnte Ausfräsung der Adapterkarte eingesetzt, wobei die Ausfräsung eine Tiefe aufweist, die der der Minichipkarte ohne der Schutzschicht entspricht. Vorzugsweise weist das Doppelklebeband zur Minichipkarte hin eine erhöhte Klebkraft auf, so daß sich die Minichipkarte mit dem Klebeband wieder aus der Adapterkarte herauslösen läßt, um gegebenenfalls nach Zufügung einer Schutzschicht wieder als Minichipkarte verwendet werden zu können.

Die vorliegende Erfindung wird im folgenden unter Bezugnahme auf die beiliegenden Zeichnungen näher erläutert. Dabei zeigen die Zeichnungen im einzelnen:
Fig. 1 eine schematische Ansicht einer Minichipkarte 1, die in einen Standardchipkartenkörper 2 eingesetzt ist,
Fig. 2 eine schematische Darstellung zur Erläuterung der Herstellungsweise der erfindungsgemäßen Minichipkarte, und
Fig. 3 eine schematische Querschnittsansicht zur Erläuterung des Einsetzens der erfindungsgemäßen Minichipkarte in eine Adapterkarte.

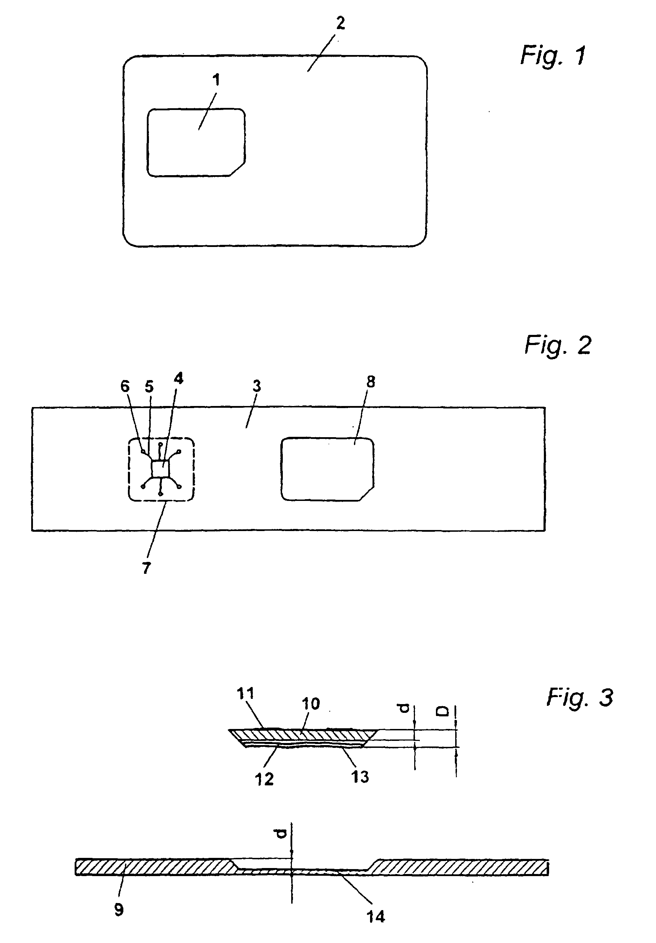

Fig. 1 zeigt eine Minichipkarte 1, die in einen Standardkartenadapter 2 eingesetzt ist. Gemäß dem Stand der Technik ist bekannt, die Minichipkarte 1 gemeinsam mit dem Standardkartenkörper 2 herzustellen und anschließend die Minichipkarte aus dem Standardkartenkörper herauszubrechen. Auch ist bekannt, eine herausgebrochene Standardchipkarte wieder in eine Adapterkarte einzusetzen. Gemäß der vorliegenden Erfindung werden Minichipkarten 1 direkt hergestellt, ohne daß dazu auch die Herstellung eines Standardchipkartenkörpers 2 erforderlich ist.

Fig. 2 verdeutlicht in schematischer Weise den Herstellungsvorgang für die erfindungsgemäße Chipkarte. Auf einem Trägerfilm 3 ist bereits der IC 4 mittels Bondverbindungen 5 durch Löcher 6 des Films mit auf der anderen Seite der Trägerfolie 3 aufgebrachten Anschlußkontakten verbunden. Gemäß dem Stand der Technik wird der so angeschlossene IC mittels eines Harztropfens oder gemäß Mouldtechnologie verkappt, so daß anschließend eine gestrichelt dargestellte Verkappung 7 verbleibt, die den Chip und seine Anschlußkontakte einschließt. Dieses so erhaltene Chipmodul wird anschließend aus dem Trägerfilm 3 ausgestanzt und in einen Kartenkörper eingesetzt. Zur Herstellung von Minichipkarten gemäß dem Stand der Technik wird aus der auf diese Weise fertiggestellten Karte anschließend die Minichipkarte ausgestanzt.

Gemäß der vorliegenden Erfindung werden diese zusätzlichen Schritte vermieden, indem die Verkappung bereits in die Form der späteren Minichipkarte gepreßt wird, so daß eine Verkappung 8 in Form einer Minichipkarte entsteht. Dieses die Form einer Minichipkarte aufweisende Modul wird anschließend aus dem Trägerfilm 3 ausgestanzt und dient als Minichipkarte. Auch ist denkbar, die Verkappung 8 in einer Form herzustellen, die noch nicht die endgültigen Minichipkartenabmessungen aufweist und die eigentliche Minichipkarte dann aus der Verkappung 8 auszustanzen. Hierzu ist wiederum denkbar, daß der gesamte Trägerfilm 3 mit einer Verkappung 8 überzogen wird und die einzelnen Minichipkarten anschließend ausgestanzt werden.

Fig. 3 verdeutlicht das Einsetzen einer so hergestellten Minichipkarte in einen Standardchipkartenkörper 9. Die hergestellte Minichipkarte 10 weist auf ihrer Oberseite schematisch dargestellte Anschlußkontakte 11 auf und ist vorzugsweise an den Rändern abgeschrägt. Die Minichipkarte 10 weist auf ihrer Unterseite ein Klebeband 12 auf, das vorzugsweise durch eine Schutzfolie oder ein Schutzpapier 13 überdeckt ist. Bevor die Minichipkarte 10 in den Kartenkörper 9 eingesetzt wird, wird die Schutzfolie 13 entfernt, so daß die Minichipkarte 10 mit dem Kartenkörper verklebt werden kann.

Die Dicke D der Minichipkarte ist zumindest mit der Schutzfolie so bemessen, daß die Minichipkarte für übliche Anwendungen eingesetzt werden kann. Nach Abziehen der Schutzfolie 13 weist die Minichipkarte eine entsprechend verringerte Dicke d auf, die vorzugsweise mit der Tiefe der Ausfräsung 14 in dem Kartenkörper 9 übereinstimmt, so daß die Oberfläche der Minichipkarte 10 nach dem Einsetzen mit der Oberfläche des Kartenkörpers 9 abschließt.

Die abgeschrägten Ränder der Minichipkarte 10, die mit entsprechenden Abschrägungen der Ausfräsung 14 in dem Kartenkörper 9 übereinstimmen, dienen der positionsgenauen Anordnung in dem Standardkartenkörper 9.

Eine Standardchipkarte weist üblicherweise die Iso-Dicke von 0,8 mm auf. Vorzugsweise kann somit die Minichipkarte mit der Schutzfolie 13 ebenfalls eine Dicke von 0,8 mm aufweisen, und nach Entfernen des Schutzstreifens kann eine verbleibende Dicke d mit ca. 0,65 mm verbleiben. Diese Dicke entspricht, wie oben ausgeführt, der Tiefe der Ausfräsung 14 in der Standardkarte oder Adapterkarte 9. Da die Klebeschicht 12 beispielsweise eine Dicke von 0,03 bis 0,05 mm aufweist, liegt die Dicke der eigentlichen Verkappung 8 bei etwa 0,58 bis 0,60 mm.

Die Klebeschicht 12 ist vorzugsweise als doppelseitiges Klebeband ausgeführt und weist vorzugsweise zur Minichipkarte 10 hin eine höhere Klebkraft auf, wodurch das Herauslösen der Minichipkarte 10 aus dem Kartenkörper 9 ermöglicht wird. Eine so herausgelöste Minichipkarte 10 kann dann wiederum mit einer Schutzfolie abgedeckt und derart als Minichipkarte verwendet werden.

## Patentansprüche

1. Minichipkarte im ID-000-Format, mit:
einem Trägerfilm (3), der auf einer Seite Anschlusskontakte (11) für die Karte trägt und auf der anderen Seite den IC (4), wobei der IC über elektrische Verbindungen, vorzugsweise über Bond-Verbindungen (5), durch Löcher (6) des Trägerfilms hindurch mit den Anschlusskontakten (11) verbunden ist,
einer gemouldeten Chipverkappung (8) aus Kunststoff, durch die der Chip und die elektrischen Verbindungen verkappt sind,
**dadurch gekennzeichnet, dass**
die gemouldete Chipverkappung (8) gleichzeitig als Kartenkörper dient und somit Abmessungen gemäß dem ID-000-Format aufweist.

2. Minichipkarte nach Anspruch 1, **dadurch gekennzeichnet, dass** die Minichipkarte (10) auf der den Anschlusskontakten (11) abgewandten Seite ein doppelseitiges Klebeband (12) aufweist, das von einer Schutzfolie (13) abgeschlossen wird.

3. Minichipkarte nach Anspruch 2, **dadurch gekennzeichnet, dass** die Dicke der Minichipkarte (10) mit Schutzfolie (13) die für die gewünschte Anwendung notwendige Dicke, vorzugsweise eine Dicke entsprechend dem ID-000-Format, aufweist.

4. Minichipkarte nach Anspruch 2, **dadurch gekennzeichnet, dass** die Dicke der Minichipkarte (10) zumindest nach Entfernen der Schutzfolie (13) geringer ist als die Dicke einer Standardchipkarte, so dass die Minichipkarte (10) in eine Standardchipkarte einsetzbar ist, in die ein Bereich (14) entsprechend der Minichipkarte ausgefräst wurde und nach Einsetzen und Verkleben mittels des Klebebandes (12) bündig mit der Oberfläche der Standardchipkarte abschließt.

5. Standardchipkarte, vorzugsweise nach dem ID-1-Format, **dadurch gekennzeichnet, dass** in dem Standardchipkartenkörper (9) ein Bereich (14) ausgefräst ist, der in seinen Abmessungen der Minichipkarte (10) gemäß den Ansprüchen 1 bis 4 entspricht und dass in den ausgefrästen Bereich (14) eine Minichipkarte (10) gemäß den Ansprüchen 1 bis 4 eingeklebt ist.

6. Verfahren zur Herstellung einer Minichipkarte im ID-000-Format mit folgenden Schritten:
Verwenden eines Trägerfilms(3);
Aufbringen von Anschlusskontakten (11) auf einer Seite des Trägerfilms (3);
Aufbringen eines ICs (4) auf der anderen Seite des Trägerfilms (3) und Verbinden des ICs (4) über Bond-Verbindungen (5) durch Löcher (6) des Trägerfilms (3) hindurch mit den Anschlusskontakten (11);
Verkappen des ICs (4) mittels Mouldtechnik, **dadurch gekennzeichnet, dass** beim Verkappen eine Form verwendet wird, die die Abmessungen der gewünschten Minichipkarte (10) definiert und somit ein verkapptes Chipkartenmodul erzeugt wird, bei dem die Verkappung die Form der zu erstellenden Minichipkarte (10) und somit Abmessungen gemäß dem ID-000-Format aufweist, und
Verwenden des so hergestellten Chipkartenmoduls als Minichipkarte (10).

7. Verfahren nach Anspruch 6, **dadurch gekennzeichnet, dass** die Dicke des erstellten Chipkartenmoduls geringer ist als die Dicke einer Standardchipkarte und vorzugsweise im Bereich von 0,58 bis 0,60 mm liegt.

8. Verfahren nach Anspruch 6 oder 7, **dadurch gekennzeichnet, dass** auf der von den Kontakten (11) abgewandten Seite des Chipkartenmoduls eine Klebeschicht aufgebracht wird, vorzugsweise in Form eines doppelseitigen Klebebandes (12).

9. Verfahren nach Anspruch 8, **dadurch gekennzeichnet, dass** das doppelseitige Klebeband (12) von einer Schutzfolie (13) abgeschlossen wird und dass die so erreichte Gesamtdicke des als Minichipkarte dienenden Chipmoduls einer Standardchipkartendicke entspricht und vorzugsweise 0,8 mm beträgt.

10. Verfahren zum Erstellen einer Standardchipkarte mit folgenden Schritten:
Verwenden eines Standardchipkartenkörpers (9)und Ausfräsen eines Bereichs (14) in dem Standardchipkartenkörper (9), der den Abmessungen einer gemäß dem Anspruch 9 hergestellten Minichipkarte (10) entspricht, und
Einkleben einer Minichipkarte (10) gemäß Anspruch 2, nachdem die Schutzfolie (13) abgezogen wurde.

## Claims

1. Mini-chipcard in ID-000 format, including:
a carrier film (3) carrying connector contacts (11) for the card on one side and the IC (14) on the other side, the IC being connected to the connector contacts (11) via electric connections, preferably via bonds (5), through perforations (6) in the carrier film,
moulded chip packaging (8) made of plastics, through which the chip and the electric connections are packaged, **characterized in that**
the moulded chip packaging (8) at the same time serves as the card body and therefore has dimensions compliant with the ID-000 format.

2. Mini-chipcard as claimed in Claim 1, **characterized in that** the mini-chipcard (10) has on the side facing away from the connector contacts (11) a double-sided adhesive tape (12) terminated by a protective film (13).

3. Mini-chipcard as claimed in Claim 2, **characterized in that** the mini-chipcard (10) including the protective film (13) has a thickness sufficient for the desired application and which preferably corresponds to the ID-000 format.

4. Mini-chipcard as claimed in Claim 2, **characterized in that** the thickness of the mini-chipcard (10) at least after removing the protective film (13) is less than the thickness of a standard chipcard, so that the mini-chipcard (10) can be inserted into a standard chipcard, in which a region (14) corresponding to the mini-chipcard has been cut out and which upon insertion and bonding by means of the adhesive tape (12) is flush with the surface of the standard chipcard.

5. Standard chipcard, preferably in ID-1 format, **characterized in that** a region (14) is cut out from the standard chipcard body (9), which corresponds in its dimensions to the mini-chipcard (10) as claimed in Claims 1 to 4, and **in that** a mini-chipcard (10) as claimed in Claims 1 to 4 is bonded into the cut-out region (14).

6. Method of manufacturing a mini-chipcard in ID-000 format, comprising the following steps:
using a carrier film (3);
applying connector contacts (11) on one side of the carrier film (3);
applying an IC (4) on the other side of the carrier film (3) and connecting the IC (4) via bonds (5) through perforations (6) in the carrier film (3) with the connector contacts (11);
packaging the IC (4) by means of mould technology, **characterized in that** during packaging a mould is used which defines the dimensions of the desired mini-chipcard (10) so that a packaged chipcard module is obtained, in which the packaging has the form of the mini-chipcard (10) to be produced and thus the dimensions of the ID-000 format, and
using the chipcard module thus obtained as a mini-chipcard (10).

7. Method as claimed in Claim 6, **characterized in that** the thickness of the produced chipcard module is less than the thickness of a standard chipcard and is preferably in the region of from 0.58 to 0.60 mm.

8. Method as claimed in Claim 6 or 7, **characterized in that** an adhesive layer, preferably in the form of a double-sided adhesive tape (12), is applied on that side of the chipcard module which faces away from the contacts (11).

9. Method as claimed in Claim 8, **characterized in that** the double-sided adhesive tape (12) is terminated by a protective film (13) and **in that** the thus-obtained overall thickness of the chip module serving as a mini-chipcard corresponds to a standard chipcard thickness and is preferably 0.8 mm.

10. Method for producing a standard chipcard, comprising the following steps:
using a standard chipcard body (9) and cutting out a region (14) in the standard chipcard body (9), which corresponds to the dimensions of a mini-chipcard (10) produced as claimed in Claim 9, and
bonding a mini-chipcard (10) as claimed in Claim 2 after having peeled off the protective film (13).

## Revendications

1. Mini-carte à puce au format ID-000 comprenant :
un film support (3) qui possède, sur une face, des contacts de connexion (11) pour la carte, et sur l'autre face, le CI (4), le CI étant relié aux contacts de connexion (11) par l'intermédiaire de connexions électriques, de préférence par des fils de connexion (5), à travers des ouvertures (6) dans le film support,
une encapsulation moulée (8) de la puce constituée de matière plastique, qui encapsule la puce et les connexions électriques,
**caractérisé en ce que**
l'encapsulation (8) moulée forme elle-même le corps de la carte et que la mini-carte à puces présente par conséquent des dimensions nettement inférieures au format ID-000.

2. Mini-carte à puce selon la revendication 1, **caractérisée en ce que** la mini-carte à puce (10) présente, sur la face opposée aux contacts de connexion (11), une bande adhésive double-face (12) qui est recouverte d'une pellicule protectrice (13).

3. Mini-carte à puce selon la revendication 2, **caractérisée en ce que** l'épaisseur de la mini-carte à puce (10) avec la pellicule protectrice (13) présente l'épaisseur nécessaire pour l'utilisation souhaitée, de préférence une épaisseur correspondant au format ID-000.

4. Mini-carte à puce selon la revendication 2, **caractérisée en ce que** l'épaisseur de la mini-carte à puce (10) est, au moins après le retrait de la pellicule protectrice (13), inférieure à l'épaisseur d'une carte à puce classique, de sorte que l'on peut insérer la mini-carte à puce (10) dans une carte à puce classique, dans laquelle on a fraisé une zone (14) correspondant à la mini-carte à puce, et qu'après l'insertion et le collage à l'aide de la bande adhésive (12), celle-ci affleure la surface de la carte à puce classique.

5. Carte à puce classique, de préférence selon le format ID-1, **caractérisée en ce que** l'on a fraisé, dans le corps de la carte à puce classique (9), une zone (14) qui correspond, en ce qui concerne ses dimensions, à la mini-carte à puce (10) selon les revendications 1 à 4 et qu'une mini-carte à puce (10) selon les revendications 1 à 4 est collée dans la zone fraisée (14).

6. Procédé de fabrication d'une mini-carte à puce en format ID-000 comprenant les étapes suivantes :
- utilisation d'un film support (3) ;
- dépôt de contacts de connexion (11) sur une face du film support (3);
- dépôt d'un CI (4) sur l'autre face du film support (3) et connexion du CI (4) par l'intermédiaire de fils de connexion (5) traversant des ouvertures (6) du film support (3) avec les contacts de connexion (11);
- encapsulation du CI (4) au moyen d'une technique de moulage, **caractérisée en ce que** l'on utilise, lors de l'encapsulation, un moule qui définit les dimensions de la mini-carte à puce (10) souhaitée et qui forme ainsi un module de carte à puce encapsulé, dans lequel l'encapsulation présente la forme de la carte à puce (10) à fabriquer et ainsi les dimensions correspondant au format ID-000, et
- utilisation du module de carte à puce ainsi fabriqué en tant que mini-carte à puce (10).

7. Procédé selon la revendication 6, **caractérisée en ce que** l'épaisseur du module de carte à puce fabriqué est inférieure à l'épaisseur d'une carte à puce classique et qu'elle va de préférence de 0,58 mm à 0,60 mm.

8. Procédé selon la revendication 6 ou 7, **caractérisé en ce que** l'on dépose, sur la face opposée aux contacts (11) du module de carte à puce, une couche adhésive, de préférence sous la forme d'une bande adhésive double-face (12).

9. Procédé selon la revendication 8, **caractérisé en ce que** la bande adhésive double-face est recouverte d'une pellicule protectrice (13) et que l'épaisseur totale ainsi obtenue du module de carte à puce servant de mini-carte à puce correspond à l'épaisseur d'une carte à puce classique et qu'elle est de préférence de 0,8 mm.

10. Procédé de fabrication d'une carte à puce classique comprenant les étapes suivantes :
- utilisation d'un corps de carte à puce classique (9) et fraisage d'une zone (14) dans le corps de carte à puce classique (9) qui correspond aux dimensions d'une mini-carte à puce (10) fabriquée selon la revendication (9), et
- collage d'une mini-carte à puce (10) selon la revendication 2 après avoir retiré la pellicule protectrice (13).
